# FASCICULE DE BREVET EUROPEEN

(11) **EP 0 931 225 B1**
(45) Date de publication et mention de la délivrance du brevet: **16.04.2003**
(21) Numéro de dépôt: 96941082.8
(22) Date de dépôt: 29.11.1996
(51) Int. Cl.: F16D 69/02, C04B 35/83, D04H 18/00

(54) **ELABORATION DE PREFORMES FIBREUSES POUR LA FABRICATION DE DISQUES DE FREIN EN MATERIAU COMPOSITE**
FABRIKATION VON FASERIGEN ROHRFORMEN ZUR HERSTELLUNG VON VERBUNDBREMSSCHEIBEN
PREPARATION OF TEXTILE PREFORMS FOR BRAKE DISCS IN COMPOSITE MATERIAL

(30) Priorité: 30.09.1996 FR 9611873
(43) Date de publication de la demande: 28.07.1999
(73) Titulaire: MESSIER BUGATTI, 78140 Velizy Villacoublay (FR)
(72) Inventeur: DUVAL, Renaud, F-69380 Les Cheres (FR); LHERM, Eric, F-01800 Rigneux-le-Franc (FR)
(74) Mandataire: Joly, Jean-Jacques
(86) Numéro de dépôt international: FR9601898
(87) Numéro de publication internationale: WO98014716

(56) Documents cités:
- EP-A- 0 530 741
- FR-A- 2 414 574
- FR-A- 2 584 107
- GB-A- 1 410 090
- GB-A- 2 099 365
- DATABASE WPI Section Ch, Week 9324 Derwent Publications Ltd., London, GB; Class E36, AN 93-197019 XP002030331 & WO 93 11185 A (GRAPHITE-BASED CONSTR MATERIALS RES INST) , 10 Juin 1993

## Description

La présente invention concerne la fabrication de disques de frein en matériau composite. Le domaine d'application de l'invention est plus particulièrement celui des disques de frein en matériau composite thermostructural. Des matériaux composites thermostructuraux pour disques de frein sont typiquement les composites carbone-carbone, ou C-C, constitués d'un renfort ou préforme en fibres de carbone densifié par une matrice en carbone, ayant éventuellement subi un traitement final de siliciuration. D'autres matériaux composites utilisables sont les composites à matrice céramique, ou CMC, constitués d'un renfort ou préforme en fibres réfractaires (carbone ou céramique) densifié par une matrice céramique, par exemple les composites carbone-carbure de silicium, ou C-SiC.

L'utilisation de matériaux composites thermostructuraux, notamment de composites C-C, pour réaliser des disques de frein est bien connue, en particulier pour des freins multidisques d'avions, mais aussi pour des véhicules terrestres, par exemple des automobiles de compétition en F1.

Une technique usuelle de fabrication de tels disques consiste à élaborer des préformes fibreuses annulaires et à les densifier par une matrice en carbone comblant la porosité des préformes.

Les préformes sont habituellement élaborées par superposition de couches de texture fibreuse qui sont liées entre elles en particulier par aiguilletage afin de donner à la préforme la cohésion nécessaire pour éliminer les risques de délaminage lors de l'utilisation des disques. Les couches de texture fibreuse sont typiquement des couches bidimensionnelles multidirectionnelles formées en partie au moins de filaments continus, par exemple des couches de tissu ou tresses ou tricots constitués de fils formés de fibres continues ou discontinues, ou des couches constituées de plusieurs nappes de câbles unidirectionnelles disposées suivant des directions différentes et liées entre elles par aiguilletage léger. Des voiles de fibres ou des couches de feutre peuvent être ajoutés afin d'apporter des fibres discontinues pouvant être aisément prélevées par les aiguilles lors de l'aiguilletage et assurer une liaison entre couches en Z (c'est-à-dire transversalement par rapport aux faces des couches). Ces voiles de fibres ou couches de feutre permettent aussi de réutiliser les chutes fibreuses produites lors de la découpe des couches de texture fibreuse, qui est nécessaire pour obtenir des préformes annulaires.

L'utilisation de voiles de fibres ou de feutres provenant de telles chutes de matière est décrite notamment dans les documents FR-A-2 626 294 et EP-A-0530741. Selon ce dernier document, des couches de feutre peuvent être intercalées entre des couches de texture fibreuse dans l'âme des préformes, ou peuvent être ajoutées sur les faces de l'âme pour constituer des couches superficielles de préforme destinées à être éliminées lors d'opération d'usinage pendant et/ou à la fin de la densification.

La densification des préformes peut être réalisée par infiltration chimique en phase vapeur ou par voie liquide, qui sont des techniques bien connues. L'infiltration chimique en phase vapeur consiste à placer les préformes à densifier dans une enceinte dans laquelle est admise une phase gazeuse précurseur de la matrice qui, dans des conditions contrôlées de température et de pression, diffuse au sein de la préformé et, par réaction entre ses constituants ou par décomposition, forme un dépôt du matériau de la matrice sur les fibres. Lorsque le dépôt se forme préférentiellement dans la porosité de surface de la préforme et tend à obturer prématurément celle-ci, il peut être nécessaire de procéder à un ou plusieurs usinages de surface, ou écroûtage, intermédiaires, afin de réouvrir la porosité de surface et de permettre à la densification de se poursuivre à coeur des préformes.

La densification par voie liquide consiste à imprégner les préformes par un précurseur de la matrice à l'état liquide, par exemple une résine, et à transformer le précurseur, généralement par traitement thermique. Plusieurs cycles consécutifs d'imprégnation peuvent être nécessaires pour atteindre le degré de densification désiré. Il est aussi possible de combiner les techniques d'infiltration chimique en phase vapeur et d'imprégnation par voie liquide.

Par rapport aux disques métalliques, les disques de frein en matériau composite thermostructural, notamment en composite C-C apportent un gain de masse considérable tout en montrant d'excellentes propriétés tribologiques et une usure réduite. Ils s'avèrent également bien adaptés aux conditions d'utilisation sévères rencontrées sur des avions et en compétition automobile en F1.

L'extension de l'utilisation de disques de frein en composite thermostructural à d'autres types de véhicules tels les trains, les poids lourds, les autocars, les véhicules utilitaires ou les automobiles de tourisme est freinée en raison notamment de problèmes particuliers rencontrés dans ces utilisations.

Ainsi, des essais effectués par la déposante sur un véhicule de tourisme haut de gamme avec des disques de frein en composite C-C élaborés par un procédé analogue à celui utilisé pour fabriquer des disques de freins d'avion ont montré parfois l'existence de vibrations indésirables, et un couple de freinage pouvant présenter des irrégularités. Dans ces disques de frein, les préformes étaient réalisées par aiguilletage de couches de texture de base, cette dernière étant formée de plusieurs nappes de câbles unidirectionnelles disposées suivant des angles différents (par exemple trois nappes à 0°, +60° et -60°) et préaiguilletées entre elles. Il est vraisemblable que l'utilisation de cette texture de base se traduit par une usure irrégulière des faces frottantes des disques au contact de plaquettes de frein, le phénomène s'aggravant au cours de la durée de vie du disque de frein, engendrant des vibrations.

La présente invention a pour but de fournir un procédé permettant de réaliser des disques de frein en matériau composite ne présentant pas ces inconvénients.

La présente invention a en particulier pour but de fournir un tel procédé permettant de réaliser des disques de frein en matériau composite convenant à une utilisation sur des véhicules automobiles de tourisme ou industriels, sans engendrer de vibrations indésirables quel que soit le régime de freinage, avec un couple de freinage régulier, et sans usure anormalement rapide.

La présente invention a encore pour but d'obtenir de telles performances à un prix de revient compatible avec une utilisation pour des disques de frein de véhicules automobiles de tourisme ou industriels de série.

De tels buts peuvent être atteints grâce à un procédé de fabrication d'un disque de frein du type comportant les étapes d'élaboration d'une préforme fibreuse par superposition et liaison entre elles de couches fibreuses comprenant des couches structurelles formées au moins en partie de filaments continus et au moins une couche de feutre, la densification de la préforme par une matrice, et l'usinage de la préforme densifiée pour obtenir le disque à ses dimensions finales, procédé selon lequel, pour l'élaboration de la préforme fibreuse, on utilise des couches fibreuses structurelles pour former au moins une première partie de préforme destinée à constituer le renfort fibreux de l'âme du disque de frein, tandis que la ou chaque partie de préforme destinée à constituer le renfort fibreux d'une partie de friction du disque de frein est constituée par un feutre au moins dans la partie adjacente à la face frottante du disque.

Par couche fibreuse structurelle formée au moins en partie de filaments continus, on entend notamment ici une couche de tissu, de tresse ou de tricot formée de fils continus eux-mêmes constitués de fibres continues ou discontinues, ou une couche constituée d'une nappe de câbles, torons ou fils continus unidirectionnels, les câbles, torons ou fils étant eux-mêmes constitués de fibres continues ou discontinues, ou une couche constituée de plusieurs de ces nappes superposées avec des directions différentes et liées entre elles par exemple par préaiguilletage ou encore une telle couche fibreuse associée à un voile mince de fibres à laquelle il est lié, par exemple par aiguilletage léger. De telles couches fibreuses structurelles permettent de constituer une partie de préforme apte à conférer à l'âme du disque de frein les propriétés mécaniques requises pour la transmission des efforts de freinage sans induire de rupture ou d'endommagement du disque, notamment au niveau de la liaison mécanique de l'âme avec l'organe auquel le disque est lié en rotation. Les couches fibreuses structurelles peuvent être disposées à plat, parallèlement aux faces du disque ou être enroulées autour de l'axe du disque. Dans ce dernier cas, la partie de préforme correspondant à l'âme du disque peut être obtenue par tronçonnage d'un manchon réalisé par enroulement sur un mandrin d'une bande de texture fibreuse structurelle formant des couches superposées liées entre elles.

Le feutre formant au moins en partie la ou chaque partie de préforme destinée à constituer le renfort fibreux d'une partie de friction du disque de frein se présente sous forme d'au moins une couche relativement épaisse ayant un taux volumique de fibres réduit, de préférence inférieur à 20 %, le taux volumique de fibres étant la fraction du volume apparent du feutre effectivement occupée par les fibres. Par couche de feutre relativement épaisse, on entend ici un feutre qui, dans la préforme élaborée, a une épaisseur au moins égale à environ 1 mm. Après densification, la majeure partie de la garniture de friction au voisinage de la face frottante est constituée par la matrice du matériau composite. Typiquement, la garniture de friction au voisinage de la face frottante comprend en volume de 10 à 15 % de fibres, de 65 à 75 % de matrice et de 15 à 20 % de porosité résiduelle ouverte.

Grâce à cette construction de la préforme, et notamment de la présence de feutre au voisinage de la face frottante, aucune vibration indésirable n'apparaît lors du freinage, contrairement à ce qui pu être constaté avec des disques de frein dans lesquels la préforme est constituée de couches fibreuses structurelles aiguilletées, y compris dans les parties de friction. De telles vibrations peuvent provenir d'une usure à la longue irrégulière de la face de frottement. La présence de feutre, c'est-à-dire de fibres courtes non orientées, dans la partie de frottement, à la place de couches fibreuses structurelles ainsi que la part prépondérante de matrice, se traduisent par une moindre anisotropie et une moindre rigidité évitant l'apparition d'irrégularités d'usure ou favorisant leur atténuation.

De plus, il a été constaté que le couple de freinage est remarquablement régulier. En outre, les performances obtenues sont aussi bonnes en environnement humide qu'à sec.

Il pourra être envisagé d'utiliser un feutre non seulement pour la ou chaque partie de préforme correspondant à une partie de friction du disque, mais aussi pour former des couches de préférence minces intercalées entre des couches fibreuses structurelles dans la première partie de préforme correspondant à l'âme du disque. Lorsque les couches fibreuses structurelles sont disposées parallèlement aux faces du disque, cela contribue à conférer une certaine souplesse au disque en direction axiale et augmente sa capacité à absorber des vibrations.

Les couches constituant la première partie de préforme correspondant à l'âme du disque sont de préférence liées entre elles par aiguilletage. Le feutre constituant au moins en partie la ou chaque partie de préforme correspondant à une partie de friction du disque peut être formé en une seule couche ou en plusieurs couches superposées également avantageusement liées entre elles par aiguilletage. La liaison entre le feutre et la première partie de préforme peut aussi être réalisée par aiguilletage. On notera que l'aiguilletage du feutre doit alors être réalisé sans provoquer un tassement propre à augmenter le taux volumique de fibres au-delà du maximum souhaité.

Une préforme annulaire de disque de frein peut être réalisée à partir de couches fibreuses planes soit par superposition et liaison entre elles de couches fibreuses prédécoupées de forme annulaire, soit par superposition et liaison entre elles de couches fibreuses pleines, de forme circulaire ou non, la préforme étant découpée ensuite de l'ensemble des couches fibreuses superposées et liées entre elles. Il est également possible de réaliser la partie de préforme correspondant à l'âme du disque par enroulement de texture fibreuse en couches superposées qui sont liées entre elles, tandis que la ou chaque partie de préforme correspondant à une partie de friction du disque est réalisée par superposition et liaison entre elles de couches fibreuses planes.

Avantageusement, pour la fabrication d'un ensemble comprenant un disque de frein rotor central à deux faces frottantes opposées et deux disques de frein stators d'extrémité à une face frottante, par exemple pour un frein à disques de véhicule industriel (poids lourd ou autocar), on élabore quatre préformes élémentaires sensiblement identiques comprenant une première partie correspondant à une partie d'âme et une deuxième partie correspondant à une partie de friction, on densifie les préformes et on obtient le disque rotor en accolant deux préformes densifiées par leurs faces opposées aux faces frottantes. Ainsi, la différenciation entre disques rotor et stators n'intervient qu'après la densification. Il est aussi envisageable d'assembler deux préformes élémentaires avant densification, pour obtenir une préforme de disque rotor, de sorte que la différenciation entre disques rotor et stators intervient après élaboration des préformes mais avant densification.

Selon encore un autre de ses aspects, l'invention a pour objet des disques de frein fabriqués comme indiqué plus haut.

Des exemples de mise en oeuvre de l'invention seront maintenant décrits à titre indicatif mais non limitatif. Référence sera faite aux dessins annexés sur lesquels :
- la figure 1 montre des étapes successives de réalisation d'un disque de frein selon un mode de réalisation du procédé conforme à l'invention ;
- la figure 2 montre des étapes successives de réalisation d'un disque de frein selon une variante du procédé de la figure 1 ;
- la figure 3 montre des étapes successives de réalisation d'une partie de préforme de disque de frein selon un autre mode de réalisation du procédé conforme à l'invention ;
- la figure 4 montre des courbes illustrant la variation du couple de freinage en fonction du temps lors de freinage avec des disques obtenus selon l'invention et des disques de l'art antérieur ;
- la figure 5 montre l'usure mesurée lors d'un freinage avec des disques de frein obtenus selon l'invention et un disque de frein de l'art antérieur ; et
- la figure 6 montre les étapes successives de réalisation de disques d'un frein à disques de poids lourds, mettant en application le procédé selon l'invention.

Dans la description qui suit, il est envisagé l'élaboration de préformes en fibres de carbone ou de précurseur de carbone en vue de la fabrication de disques de frein en matériau composite C-C. Il doit toutefois être noté que l'invention est applicable à des disques de frein en matériau composite autre que C-C, en particulier en matériau composite à fibres de renfort et/ou matrice au moins en partie en céramique, par exemple au moins en partie en SiC, ou en matériau composite C-C siliciuré.

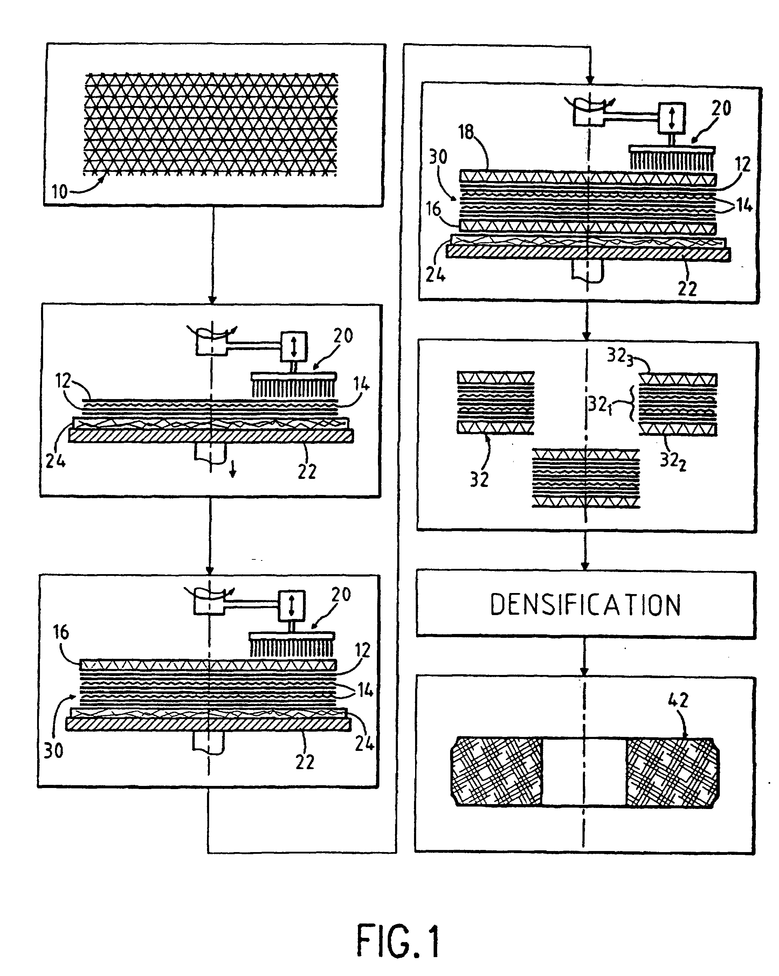

Une préforme annulaire de disque de frein ayant deux faces frottantes, par exemple un disque de frein destiné à coopérer avec des plaquettes dans un frein de véhicule automobile, tel qu'un véhicule automobile de tourisme de série peut être réalisée comme suit (figure 1).

Le matériau de départ utilisé pour la partie de préforme correspondant à l'âme du disque est une texture de base 10 formée à partir de fibres de carbone ou de précurseur de carbone, lequel précurseur peut être par exemple du polyacrylonitrile (PAN) préoxydé, un brai, une rayonne ou un composé phénolique. Lorsque la préforme est réalisée à partir de fibres en précurseur de carbone, la transformation du précurseur est réalisée par traitement thermique de préférence après élaboration de la préforme et avant densification de celle-ci. On notera que la préforme peut être obtenue avec des fibres de carbone provenant de plusieurs précurseurs différents.

La texture de base 10 est réalisée au moins en partie avec des éléments continus formant une texture bidimensionnelle multidirectionnelle. Il peut s'agir d'un tissu, d'une tresse, d'un tricot, d'une nappe unidirectionnelle, ou, comme dans l'exemple illustré schématiquement, d'une superposition de plusieurs nappes unidircctionnclles de fils, câbles ou torons. Les nappes sont superposées avec des directions différentes et assemblées par aiguilictage léger. On pourra par exemple former la texture de base à partir de trois nappes unidirectionnelles disposées respectivement à 0°, +60° et -60° par rapport à un axe de la texture. Eventuellement, la texture de base peut être complétée par un voile mince de fibres préaiguilleté sur la texture.

Une première partie de préforme annulaire de disque de frein est réalisée en empilant à plat des strates 12 de la texture de base 10 et en les liant entre elles par aiguilletage. Plusieurs couches minces de feutre 14 peuvent être intercalées chacune entre deux strates 12. Par couche mince de feutre, on entend ici une couche de feutre ayant une masse surfacique inférieure à 500 g/m², par exemple comprise entre 200 et 300 g/m² et un taux de fibres inférieur à 20 %, par exemple compris entre 7 et 14 %, à l'état relaxé (avant compression due à l'aiguilletage). L'aiguilletage est réalisé au moyen d'une tête d'aiguilletage 20 en forme de planche à aiguilles, tandis que les strates sont disposées sur un support 22 recouvert d'un feutre d'embase 24 dans lequel les aiguilles peuvent pénétrer sans être endommagées. La planche à aiguilles a une longueur correspondant sensiblement à la distance radiale entre circonférence intérieure et circonférence extérieure de la partie de préforme annulaire à réaliser. A chaque fois qu'une nouvelle strate 12 ou couche 14 est déposée, une passe d'aiguilletage annulaire est réalisée. A cet effet, comme décrit par exemple dans le document FR-A-2 626 294, une rotation complète entre la tête d'aiguilletage 20 et le support 22 autour de l'axe de la partie de préforme est réalisée, au cours de laquelle un nombre prédéterminé de coups d'aiguilletage sont effectués en faisant pénétrer les aiguilles au sein de la partie de préforme en cours d'élaboration, perpendiculairement à la surface de celle-ci. La rotation peut être réalisée par entraînement de la tête d'aiguilletage ou du support 22 autour de l'axe de la préforme. La profondeur d'aiguilletage au cours de chaque passe peut être est maintenue sensiblement constante ou variable, par exemple légèrement croissante, en abaissant pas à pas le support 22 au fur et à mesure de l'élaboration de la partie de préforme. Lorsqu'une épaisseur correspondant sensiblement à celle de l'âme du disque de frein à réaliser a été atteinte, plusieurs passes d'aiguilletage de finition peuvent être réalisées, après aiguilletage de la dernière strate, afin d'obtenir une densité d'aiguilletage volumique sensiblement constante. Des procédés d'élaboration de préformes avec densité d'aiguilletage volumique sensiblement constante sont décrits dans les documents FR-A-2 584 106 et FR-A-2 726 013.

La partie de préforme 30 ainsi obtenue est complétée sur chaque face par une couche de feutre dont l'épaisseur est choisie en fonction de celle des parties de friction du disque à réaliser. Ainsi, la partie de préforme 30 étant maintenue en place, une couche de feutre 16 est disposée sur sa face supérieure et liée à celle-ci par exécution d'une passe d'aiguilletage annulaire de la façon décrite précédemment. La partie de préforme 30 munie de la couche de feutre 16 est dégagée du support 22 et du feutre d'embase 24, puis est retournée et remise en place afin de pouvoir déposer et aiguilleter une couche de feutre 18 sur l'autre face, de la même façon que la couche 16.

En variante, chaque couche de feutre 16, 18 peut être remplacée par deux couches ou plus aiguilletées successivement sur la partie de préforme 30. Il est également possible d'utiliser une ou plusieurs couches de feutre pour former une partie seulement de l'épaisseur des parties de préforme correspondant aux parties de friction du disque, le reste étant formé par des strates analogues par exemple aux strates 12. Dans ce cas, la ou les couches de feutre sont disposées de manière à être adjacentes à la face externe (face frottante). Dans tous les cas, on utilise pour chacune des parties de préforme correspondant aux parties de friction du disque au moins une couche de feutre relativement épaisse. On entend ici par couche de feutre épaisse une couche ayant une masse surfacique supérieure à 500 g/m², par exemple comprise entre 600 et 800 g/m², avec un taux de fibres inférieur à 20 %, par exemple compris entre 10 et 15 %, à l'état relaxé. Cela correspond sensiblement à une épaisseur, après aiguilletage, au moins égale à 1 mm, ou à une épaisseur, à l'état relaxé, de plusieurs millimètres, par exemple au moins 3 mm.

La partie de préforme 30 munie des couches de feutre 16, 18 est découpée à l'emporte-pièce afin d'obtenir une préforme annulaire 32 de disque de frein avec une première partie 32₁ correspondant à l'âme du disque, formée par les strates 12 et couches 14 aiguilletées, et deux parties latérales 32₂, 32₃ correspondant aux parties de friction du disque, formées par les couches de feutre 16, 18.

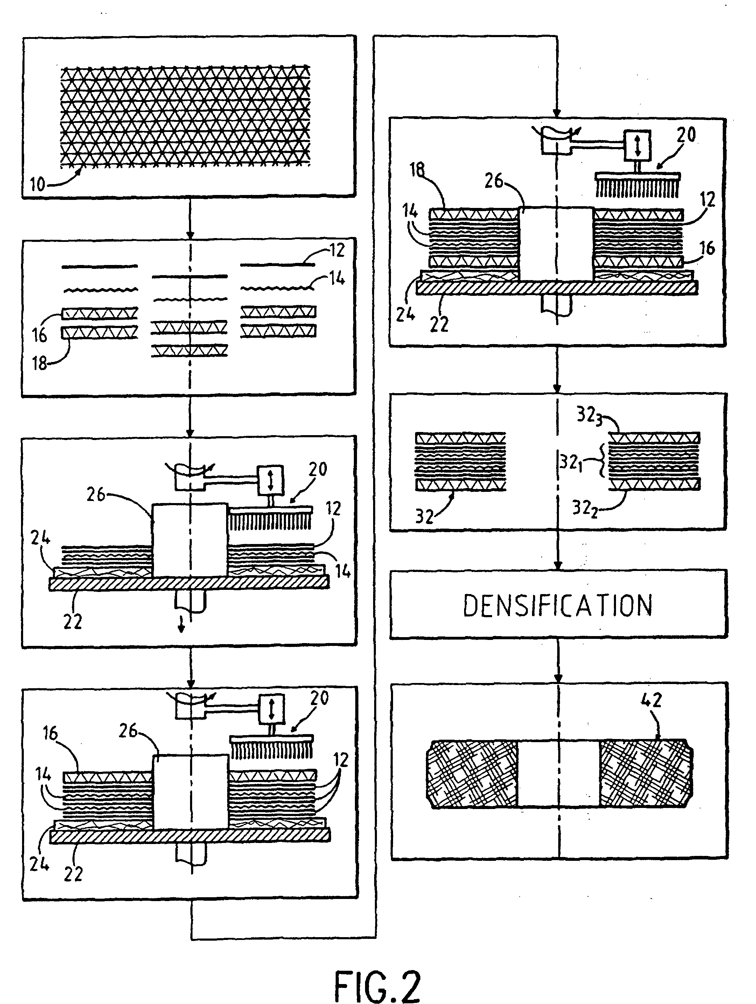

Dans ce qui précède, il a été envisagé de réaliser la découpe annulaire après aiguilletage de la préforme. En variante, comme montré sur la figure 2, il est possible de découper les strates 12 et couches de feutre 14, 16, 18 afin de leur donner la forme annulaire voulue, avant aiguilletage. L'opération d'aiguilletage peut être réalisée d'une façon analogue à celle décrite précédemment, c'est-à-dire en passes d'aiguilletage annulaires successives. Il est préférable alors que les strates et couches de feutre en cours d'aiguilletage soient maintenues en place au moyen d'un outillage formé au moins d'un noyau central 26 faisant saillie axialement du support 22 portant le feutre d'embase annulaire 24.

Après formation d'une première partie de préforme 32₁ par aiguilletage de strates annulaires 12 avec des couches annulaires de feutre mince 14 éventuellement intercalées, et après ajout et liaison par aiguilletage de couches annulaires 16, 18 sur les faces de la partie de préforme 32 de façon à former deux parties de préforme 32₂, 32₃, on obtient une préforme de disque de frein 32 semblable à celle décrite plus haut.

Des disques de frein 42 en composite C-C sont fabriqués à partir des préformes 32 élaborées comme décrit ci-dessus en soumettant les préformes à une opération de densification par une matrice carbone, le cas échéant après traitement thermique de carbonisation lorsque les préformes sont réalisées à partir de fibres en précurseur de carbone. De façon bien connue en soi, la densification est réalisée par infiltration chimique en phase vapeur ou par voie liquide.

Les préformes densifiées sont ensuite usinées pour conférer aux disques 42 leurs dimensions finales et former les encoches nécessaires à leur liaison avec l'organe auquel ils sont liés en rotation.

Dans ce qui précède, on a envisagé la formation de la préforme annulaire par empilement à plat de strates de texture fibreuse et de couches de feutre parallèles aux faces du disque.

En variante, il est possible d'utiliser pour la partie de préforme correspondant à l'âme du disque une bande de tissu spiral ou hélicoïdal, éventuellement associée à une bande de feutre mince, qui est enroulée en couches superposées à plat autour d'un noyau central, avec aiguilletage de la bande au fur et à mesure de son enroulement. Un procédé de ce type est décrit dans la demande de brevet français déposée sous le No 95 14 000. De façon similaire, pour la ou chaque partie de préforme correspondant à une partie de friction du disque, on peut utiliser une bande de feutre enroulée en couches superposées et aiguilletées.

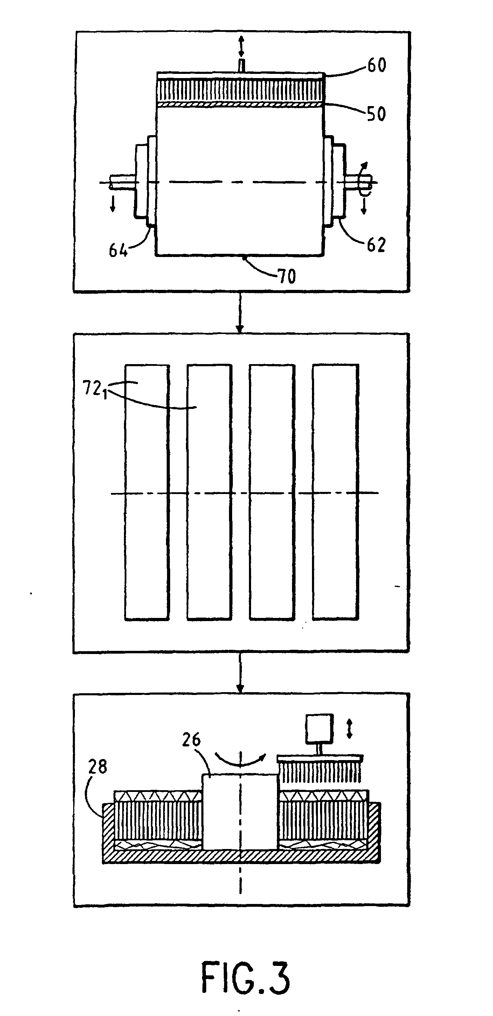

Selon encore une autre variante illustrée par la figure 3, la partie de préforme correspondant à l'âme du disque est obtenue à partir d'un enroulement a'une bande 50 de texture fibreuse en couches superposées sur un mandrin. La bande 50 est en texture structurelle, par exemple un tissu, éventuellement associée à une bande de feutre mince.

La bande 50 est aiguilletée sensiblement au niveau où elle vient se superposer aux couches déjà enroulées. L'aiguilletage est réalisé au moyen d'une planche à aiguilles 60 qui s'étend sur la largeur de la bande 50. Le mandrin 62 est par exemple un mandrin rotatif muni d'une couche d'embase 64 dans laquelle les aiguilles peuvent pénétrer lors de l'aiguilletage des premières couches. Après une rotation complète, le mandrin 62 est abaissé par rapport aux aiguilles de manière à avoir une profondeur d'aiguilletage sensiblement constante, ou légèrement variable, de façon contrôlée. Lorsque le nombre nécessaire de couches 52 a été formé, des passes d'aiguilletage de finition peuvent être réalisées. Un procédé de fabrication de préformes cylindriques avec densité d'aiguilletage volumique constante est décrit dans le document FR-A-2 584 107.

On notera, en variante, que l'enroulement de la bande peut être réalisé par contact tangentiel avec un rouleau, le mandrin étant fixe et muni de perforations au regard des aiguilles, ce qui évite d'avoir recours à un revêtement d'embase.

Le manchon aiguilleté obtenu 70 est tronçonné suivant des plans radiaux, pour fournir des parties de préformes annulaires 72₁ correspondant chacune à une âme de disque de frein.

Une partie de préforme correspondant à une partie de friction de disque de frein et comprenant au moins une couche de feutre est ensuite aiguilletée sur une ou chaque face des préformes 72₁. On peut utiliser à cet effet l'installation de la figure 2 en la complétant avantageusement par une paroi cylindrique périphérique 28 qui, en combinaison avec le noyau central 26, assure le maintien et le guidage de la partie de la préforme 72₁.

### EXEMPLE 1

Des disques de frein avant en composite C-C pour véhicules de tourisme de type "Mercédès E600" sont réalisés comme suit, en utilisant le procédé de la figure 1.

La texture fibreuse de base utilisée pour la partie de préforme correspondant à l'âme du disque est constituée par un complexe formé de trois nappes unidirectionnelles en fibres de polyacrylonitrile (PAN) préoxydé ayant une masse surfacique d'environ 1 000 g/m², superposées suivant trois directions différentes (0°, +60°, -60°) et préaiguilletées avec un feutre mince de masse surfacique d'environ 300 g/m². Plusieurs strates de texture fibreuse de base sont superposées en étant aiguilletées pour obtenir de préférence une densité volumique d'aiguilletage constantc, comme décrit dans le document FR-A-2 584 106, ou le document FR-A-2 726 013, jusqu'à obtenir une épaisseur d'environ 22 mm.

Sur chaque face de la partie de préforme ainsi obtenue sont successivement superposées et aiguilletées huit couches de feutre ayant une masse surfacique d'environ 800 g/m², jusqu'à obtenir une épaisseur d'environ 10 mm. Chaque couche de feutre est aiguilletée de manière, comme précédemment, à obtenir une densité volumique d'aiguilletage constante.

Une préforme annulaire ayant des diamètres intérieur et extérieur égaux respectivement à 420 mm et 180 mm est ensuite découpée et est soumise à un traitement de carbonisation, pour transformer le PAN préoxydé en carbone, en étant éventuellement maintenue en forme par un outillage.

La densification de la préforme par une matrice de carbone pyrolytique est réalisée par infiltration chimique en phase vapeur.

Des disques ainsi obtenus sont essayés avec des plaquettes de frein en matériau composite C-C de l'art antérieur.

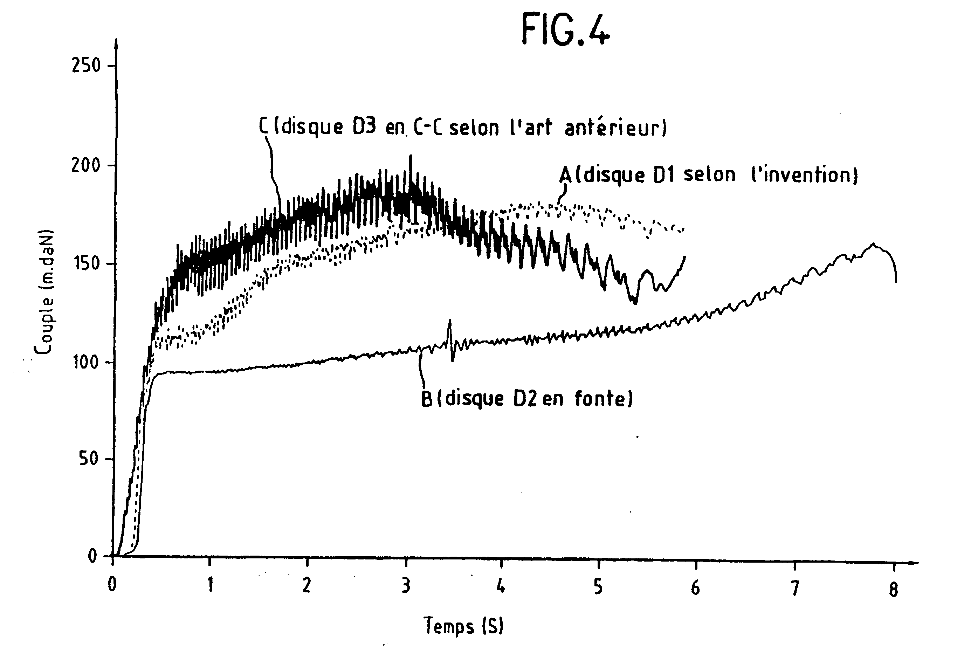

Un premier essai de freinage à sec est réalisé avec un disque de frein D1 et des plaquettes obtenus comme indiqué ci-avant. Le couple de freinage est mesuré de façon continue pendant toute la durée de freinage nécessaire pour faire passer la vitesse de 200 km/h à 0 km/h. La courbe A de la figure 4 illustre la variation du couple mesuré en fonction du temps. A titre de comparaison, des essais comparatifs sont effectués avec le frein de série du véhicule considéré (disque de frein D2 en fonte) et avec un disque de frein D3 en composite C-C de l'art antérieur. Le disque de frein D3 de l'art antérieur se distingue du disque D1 en ce que la préforme est réalisée intégralement par aiguilletage de strates de la texture de base 10 de la figure 1, sans incorporation de feutre, que ce soit au niveau des faces frottantes ou de l'âme. Les courbes B et C de la figure 4 illustrent les variations du couple mesuré en fonction du temps avec les disques D2 et D3.

On remarque que la durée de freinage avec les disques en composite C-C est réduite de 2 s par rapport à ce qui est obtenu avec le disque en fonte (de 8 s à 6 s environ), mais que le disque D3 induit des instabilités du couple de freinage qui se traduisent par des vibrations importantes. Ces variations du couple de freinage sont considérablement réduites avec le disque D1, le gain en stabilité du couple (rapport entre variation du couple □c et couple c) étant de plus de 60 %. On note en outre, un gain très important de la stabilité S du coefficient de frottement µ, S étant le rapport entre, d'une part, la différence entre la valeur maximale µmax et la valeur minimale µmin mesurées lors de l'essai et, d'autre part, la valeur moyenne calculée µmoy [S = (µmax - µmin) / µmoy]. En effet, la valeur de S est de 0,23 en freinage à sec et 0,39, en freinage humide, avec les disques D1 selon l'invention, tandis qu'elle est respectivement de 0,46, en freinage à sec et 0,61 en freinage humide, avec les disques D3 de l'art antérieur. En outre, le couple de freinage, donc l'efficacité du freinage, croît au cours du freinage, ce qui n'est pas le cas avec le disque D3.

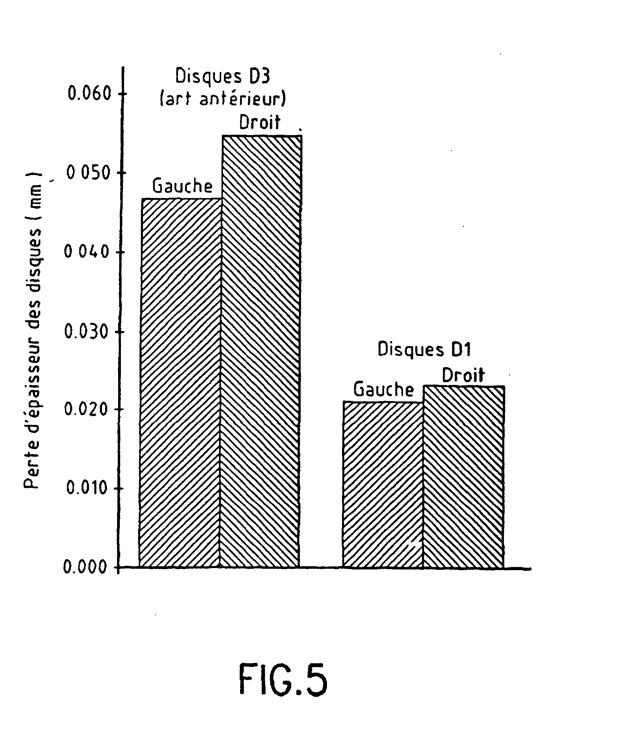

Une deuxième série d'essais de freinage à sec est réalisée avec des disques montés sur le train avant du véhicule considéré de type "Mercédès E600". L'usure des disques gauche et droit est mesurée respectivement avec des disques D1 et des disques D3. La figure 5 montre l'usure mesurée en terme de perte d'épaisseur des disques lors d'un freinage haute énergie de 250 km/h à 100 km/h. De façon remarquable, l'usure mesurée avec les disques D1 obtenus conformément à la présente invention est environ 2 fois inférieure à celle mesurée avec des disques en composite C-C de l'art antérieur.

### EXEMPLE 2

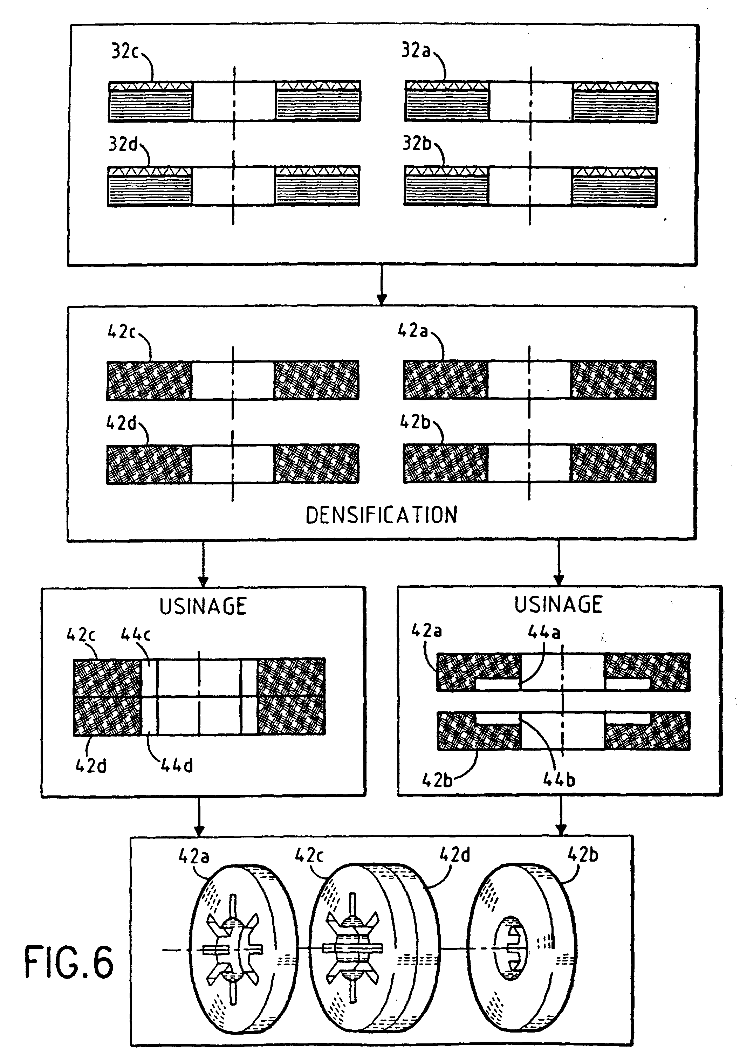

Un ensemble comprenant un disque de frein rotor et deux disques de frein stators pour un frein à disques de véhicule poids lourd est réalisé comme suit (figure 6).

Des préformes annulaires élémentaires identiques 32a, 32b, 32c, 32d sont élaborées conformément au procédé de la figure 1, de la façon suivante.

Chaque préforme comprend une première partie correspondant à une partie d'âme de disque, formée par superposition et aiguilletage de couches d'une texture fibreuse de base, par exemple identique à celle utilisée dans l'exemple 1. Sur une des faces de cette partie de préforme sont superposées et aiguilletées des couches de feutre pour former une deuxième partie de préforme correspondant à une partie de friction de disque.

Après carbonisation, les préformes 32a, 32b, 32c, 32d sont densifiées par une matrice carbone comme décrit dans l'exemple 1.

On obtient alors deux disques stators 42a, 42b avec une âme et une face frottante correspondant aux préformes densifiées 32a, 32b et deux demi-disques rotor 42c, 42d destinés à former un disque rotor en étant accolés par leurs faces opposées aux faces frottantes. L'épaisseur des disques stators est moitié de celle du disque rotor, ce qui est tout à fait acceptable pour l'application considérée.

Les disques sont usinés pour être portés à leurs dimensions finales et pour former des encoches permettant leur montage. Ainsi, les demi-disques rotor 42c, 42d sont munis sur toute leur épaisseur d'encoches axiales 44c, 44d faisant saillie à partir de leur face interne et destinées à coopérer avec des nervures correspondantes d'un arbre lié en rotation à une roue du poids lourd. L'assemblage des demi-disques rotor peut être réalisé directement lors de leur montage sur l'arbre, par exemple par serrage mutuel au niveau de leurs moyeux. Quant aux disques stators 42a, 42b, ils sont munis d'encoches radiales 44a, 44b qui s'étendent à partir de la circonférence interne en étant formées sur une partie simplement de l'épaisseur des disques depuis leurs faces arrière opposées aux faces frottantes. Les encoches 44a, 44b sont destinées à coopérer avec des clavettes permettant de transmettre les efforts de freinage au châssis du poids lourd. Ce mode de liaison mécanique avec l'âme du disque permet d'utiliser pour celle-ci une partie de préforme obtenue à partir d'une bande enroulée en couches superposées perpendiculaires aux faces du disque, comme dans le mode de réalisation de la figure 3. En effet, les efforts transmis ne risquent alors pas d'entraîner un délaminage de la préforme, c'est-à-dire une décohésion entre les couches, comme ce serait le cas si les efforts étaient transmis par des encoches formées à la couronne extérieure de l'âme du disque, sur toute l'épaisseur de celle-ci.

Le mode de réalisation de la figure 6 est particulièrement avantageux en ce qu'il permet de partir de préformes standards. On notera, en variante, que l'assemblage nécessaire pour obtenir le disque rotor pourra être réalisé avant densification des préformes d'origine. Bien entendu, la possibilité d'élaborer séparément chaque préforme de disque n'est toutefois pas exclue.

## Revendications

1. Procédé de fabrication d'un disque de frein en matériau composite ayant une âme et au moins une partie de friction située d'un côté de l'âme et ayant une face frottante externe, comprenant les étapes qui consistent à :
- élaborer une préforme fibreuse par superposition et liaison entre elles de couches fibreuses comprenant des couches structurelles formées au moins en partie de filaments continus et au moins une couche de feutre,
- densifier la préforme par une matrice, et
- usiner la préforme densifiée pour obtenir le disque à ses dimensions finales,
**caractérisé en ce que**, pour l'élaboration de la préforme fibreuse, on utilise des couches fibreuses structurelles pour former au moins une première partie de préforme destinée à constituer le renfort fibreux de l'âme du disque de frein, tandis que la ou chaque partie de préforme destinée à constituer le renfort fibreux d'une partie de friction du disque de frein est constituée par un feutre au moins dans la partie adjacente à la face frottante du disque.

2. Procédé de fabrication d'un ensemble de freinage en matériau composite comprenant un disque de frein rotor ayant une âme et deux parties de friction situées de part et d'autre de l'âme, et deux disques de frein stators ayant chacun une âme et une partie de friction d'un côté de l'âme, les parties de friction du disque rotor et des disques stators ayant des faces frottantes externes, **caractérisé en ce qu'**il comprend les étapes qui consistent à :
- élaborer quatre préformes fibreuses élémentaires sensiblement identiques, chaque préforme élémentaire étant élaborée par superposition et liaison entre elles de couches fibreuses comprenant des couches structurelles formées au moins en partie de filaments continus et au moins une couche de feutre, des couches structurelles étant utilisées pour former au moins une première partie de préforme destinée à constituer au moins une partie de l'âme d'un disque, tandis qu'une deuxième partie de préforme destinée à constituer le renfort fibreux d'une partie de friction de disque est constituée par un feutre au moins dans la partie adjacente à la face frottante,
- densifier les quatre préformes par une matrice,
- obtenir une préforme densifiée pour un disque rotor à deux faces frottantes par assemblage de deux préformes élémentaires densifiées avec leurs premières parties de préforme disposées côte à côte, et usiner les deux préformes aux dimensions définitives du disque rotor, de manière à obtenir un disque rotor dont le renfort fibreux est constitué par un feutre dans ses parties adjacentes aux faces frottantes du disque,
- usiner chacune des deux autres préformes aux dimensions définitives d'un disque stator, de manière à obtenir deux disques stators dont le renfort fibreux est constitué par un feutre dans sa partie adjacente à la face frottante du disque.

3. Procédé selon l'une quelconque des revendications 1 et 2, **caractérisé en ce que** l'on intercale des couches de feutre entre des couches fibreuses structurelles d'une première partie de préforme.

4. Procédé selon l'une quelconque des revendications 1 à 3, **caractérisé en ce que** les couches constitutives d'une première partie de préforme sont liées entre elles par aiguilletage.

5. Procédé selon l'une quelconque des revendications 1 à 4, **caractérisé en ce que** les couches constitutives d'une première partie de préforme sont formées par enroulement d'une bande de texture fibreuse.

6. Procédé selon la revendication 5, **caractérisé en ce que** la bande de texture fibreuse comprend un tissu hélicoïdal enroulé en couches superposées à plat.

7. Procédé selon la revendication 5, **caractérisé en ce qu'**il comprend la formation d'un manchon cylindrique par enroulement de la bande de texture fibreuse autour d'un mandrin et le tronçonnage du manchon suivant des plans radiaux pour obtenir des premières parties de préforme.

8. Procédé selon l'une quelconque des revendications 1 à 7, **caractérisé en ce que** le feutre formant au moins en partie la ou chaque partie de préforme destinée à constituer le renfort fibreux d'une partie de friction de disque de frein est lié au reste de la préforme par aiguilletage.

9. Procédé selon l'une quelconque des revendications 1 à 8, **caractérisé en ce que** le feutre formant au moins en partie la ou chaque partie de préforme destinée à constituer le renfort fibreux d'une partie de friction de disque de frein a un taux volumique de fibres inférieur à 20 %.

10. Procédé selon la revendication 2, **caractérisé en ce que** l'on accole deux préformes fibreuses élémentaires par leurs premières parties de préforme avant densification par une matrice et on réalise la densification des deux préformes accolées pour obtenir la préforme densifiée de disque rotor.

11. Procédé selon l'une quelconque des revendications 2 et 10, **caractérisé en ce que** l'usinage final des disques stators comprend la formation d'encoches s'étendant radialement et sur une profondeur inférieure à l'épaisseur de l'âme du disque à partir de la face arrière opposée à la face frottante.

12. Procédé selon la revendication 11, **caractérisé en ce que** la première partie de préforme destinée à constituer l'âme du disque est obtenue à partir d'un enroulement d'une bande de texture fibreuse en couches superposées autour d'un mandrin.

13. Disque de frein en matériau composite comprenant une préforme fibreuse densifiée par une matrice, le disque ayant une partie d'âme et au moins une partie de friction ayant une face frottante, d'un côté de l'âme, et la préforme fibreuse comportant des couches fibreuses liées entre elles comprenant des couches structurelles formées au moins en partie de filaments continus et au moins une couche de feutre, **caractérisé en ce que** la partie de préforme constituant le renfort fibreux de la ou chaque partie de friction du disque est constituée par un feutre au moins dans la partie adjacente à la face frottante, tandis que la partie de préforme constituant le renfort fibreux de l'âme du disque comprend des couches fibreuses structurelles.

14. Disque de frein selon la revendication 13, **caractérisé en ce que** ledit feutre a un taux volumique de fibres inférieur à 20 %.

15. Disque de frein selon la revendication 13, **caractérisé en ce que** la ou chaque partie de friction du disque comprend, en volume, de 10 à 15 % de fibres, de 65 à 75 % de matrice et de 15 à 20 % de porosité résiduelle.

16. Disque de frein selon l'une quelconque des revendications 13 à 15, **caractérisé en ce que** la partie de préforme constituant le renfort fibreux de l'âme du disque comprend des couches de feutre intercalées entre des couches fibreuses structurelles.

17. Disque de frein selon l'une quelconque des revendications 13 à 16, **caractérisé en ce que** la partie de préforme constituant le renfort fibreux de l'âme du disque comprend des couches fibreuses parallèles aux faces du disque.

18. Disque de frein selon l'une quelconque des revendications 13 à 16, **caractérisé en ce que** la partie de préforme constituant le renfort fibreux de l'âme du disque comprend des couches fibreuses perpendiculaires aux faces du disque

19. Disque de frein selon l'une quelconque des revendications 13 à 18, **caractérisé en ce que** la préforme fibreuse et la matrice sont en carbone.

20. Dispositif de freinage pour véhicule automobile de tourisme, **caractérisé en ce qu'**il comprend au moins un disque de frein selon l'une quelconque des revendications 13 à 19 coopérant avec des plaquettes de freins.

21. Dispositif de freinage pour véhicule routier poids lourd, **caractérisé en ce qu'**il comprend au moins un ensemble de deux disques stators et un disque rotor selon l'une quelconque des revendications 13 à 19.

22. Dispositif de freinage selon la revendication 21, **caractérisé en ce que** chaque disque stator présente des encoches radiales formées sur une partie de l'épaisseur du disque dans sa face opposée à la face frottante.

## Patentansprüche

1. Verfahren zur Herstellung einer Bremsscheibe aus Verbundmaterial mit einem Kern und mindestens einem Reibteil, das an einer Seite des Kerns liegt und eine äußere Reibfläche hat, aufweisend die Schritte, die bestehen in:
- Fertigen einer Faservorform durch übereinander Legen und miteinander Verbinden von Faserlagen, die mindestens teilweise aus Endlosfasern gebildete Strukturlagen und mindestens eine Filzlage aufweist,
- Verdichten der Vorform durch eine Matrix, und
- Bearbeiten der verdichteten Vorform, um die Scheibe in ihren Endabmessungen zu erhalten,
**dadurch gekennzeichnet, dass** man zur Fertigung der Faservorform Struktur-Faserlagen verwendet, um mindestens einen ersten Vorformteil, der die Faserverstärkung des Kerns der Bremsscheibe ausmachen soll, zu bilden, während der oder jeder Vorformteil, der die Faserverstärkung eines Reibteils der Bremsscheibe ausmachen soll, mindestens in dem der Reibfläche der Scheibe zugekehrten Teil von einem Filz gebildet wird.

2. Verfahren zur Herstellung einer Bremsanordnung aus Verbundmaterial, aufweisend eine Rotor-Bremsscheibe mit einem Kern und zwei beiderseits des Kerns liegenden Reibteilen, und zwei Stator-Bremsscheiben, von denen jede einen Kern und ein Reibteil an einer Seite des Kerns hat, wobei die Reibteile der Rotorscheibe und der Statorscheiben äußere Reibflächen haben,
**dadurch gekennzeichnet, dass** es die Schritte aufweist, die bestehen in:
- Fertigen von vier im Wesentlichen gleichen Faser-Grundvorformen, wobei jede Grundvorform durch übereinander Legen und miteinander Verbinden von Faserlagen, die mindestens zum Teil aus Endlosfasern gebildete Strukturlagen und mindestens eine Filzlage aufweist, gefertigt wird, wobei Strukturlagen verwendet werden, um mindestens einen ersten Vorformteil, der mindestens einen Teil des Kerns einer Scheibe ausmachen soll, zu bilden, während ein zweiter Vorformteil, der die Faserverstärkung eines Reibteils der Scheibe ausmachen soll, mindestens in dem der Reibfläche zugewandten Teil von einem Filz gebildet wird;
- Verdichten der vier Vorformen durch eine Matrix,
- Erhalten einer verdichteten Vorform für eine Rotorscheibe mit zwei Reibflächen durch Zusammenfügen von zwei verdichteten Grundvorformen, wobei ihre ersten Vorformteile Seite an Seite angeordnet werden, und Bearbeiten der zwei Vorformen auf die endgültigen Abmessungen der Rotorscheibe dergestalt, dass eine Rotorscheibe erhalten wird, deren Faserverstärkung in ihren den Reibflächen der Scheibe zugewandten Teilen von einem Filz gebildet wird,
- Bearbeiten jeder der zwei anderen Vorformen auf die endgültigen Abmessungen einer Statorscheibe dergestalt, dass zwei Statorscheiben erhalten werden, deren Faserverstärkung in ihrem der Reibfläche der Scheibe zugewandten Teil von einem Filz gebildet wird.

3. Verfahren nach Anspruch 1 oder 2,
**dadurch gekennzeichnet, dass** man zwischen Struktur-Faserlagen eines ersten Vorformteils Filzlagen legt.

4. Verfahren nach einem der Ansprüche 1 bis 3,
**dadurch gekennzeichnet, dass** die einen ersten Vorformteil bildenden Lagen miteinander durch Nadelung verbunden werden.

5. Verfahren nach einem der Ansprüche 1 bis 4,
**dadurch gekennzeichnet, dass** die einen ersten Vorformteil bildenden Lagen durch Aufwickeln eines Streifens mit Faserstruktur gebildet werden.

6. Verfahren nach Anspruch 5,
**dadurch gekennzeichnet, dass** der Streifen mit Faserstruktur ein spiralförmiges Gewebe aufweist, das in flach übereinander gelegten Lagen aufgewickelt ist.

7. Verfahren nach Anspruch 5,
**dadurch gekennzeichnet, dass** es die Bildung einer zylindrischen Hülse durch Aufwickeln des Streifens mit Faserstruktur um einen Dorn und das in Stücke Teilen der Hülse in radialen Ebenen, um erste Vorformteile zu erhalten, aufweist.

8. Verfahren nach einem der Ansprüche 1 bis 7,
**dadurch gekennzeichnet, dass** der Filz, der mindestens einen Vorformteil oder jeden Vorformteil, der die Faserverstärkung eines Reibteils einer Bremsscheibe ausmachen soll, bildet, durch Nadelung mit dem Rest der Vorform verbunden wird.

9. Verfahren nach einem der Ansprüche 1 bis 8,
**dadurch gekennzeichnet, dass** der Filz, der mindestens einen Vorformteil oder jeden Vorformteil, der die Faserverstärkung eines Reibteils einer Bremsscheibe ausmachen soll, bildet, einen Faser-Volumengehalt unterhalb 20% hat.

10. Verfahren nach Anspruch 2,
**dadurch gekennzeichnet, dass** man zwei Faser-Grundvorformen vor Verdichtung durch eine Matrix mit ihren ersten Vorformteilen aneinander fügt und die Verdichtung der zwei aneinander gefügten Vorformen durchführt, um die verdichtete Rotorscheiben-Vorform zu erhalten.

11. Verfahren nach Anspruch 2 oder 10,
**dadurch gekennzeichnet, dass** die Endbearbeitung der Statorscheiben die Bildung von Aussparungen, die sich ausgehend von der der Reibfläche entgegengesetzten Rückseite in radialer Richtung und über eine Tiefe, die geringer ist als die Dicke des Kerns der Scheibe, erstrecken, aufweist.

12. Verfahren nach Anspruch 11,
**dadurch gekennzeichnet, dass** der erste Vorformteil, der den Kern der Scheibe ausmachen soll, ausgehend von einer Aufwicklung eines Streifens mit Faserstruktur in übereinander liegenden Lagen um einen Dorn erhalten wird.

13. Bremsscheibe aus Verbundmaterial aufweisend eine mit einer Matrix verdichtete Faservorform, wobei die Scheibe einen Kernteil und mindestens einen Reibteil mit einer Reibfläche an einer Seite des Kerns hat, und wobei die Faservorform miteinander verbundene Faserlagen enthält, aufweisend mindestens zum Teil aus Endlosfasern gebildete Gefügelagen und mindestens eine Filzlage,
**dadurch gekennzeichnet, dass** der die Faserverstärkung des Reibteils der Scheibe oder jedes Reibteils der Scheibe ausmachende Vorformteil mindestens in dem der Reibfläche zugewandten Teil von einem Filz gebildet wird, während der die Faserverstärkung des Kerns der Scheibe ausmachende Vorformteil Struktur-Faserlagen aufweist.

14. Bremsscheibe nach Anspruch 13,
**dadurch gekennzeichnet, dass** der Filz einen Faser-Volumengehalt unterhalb 20% hat.

15. Bremsscheibe nach Anspruch 13,
**dadurch gekennzeichnet, dass** der Reibteil oder jeder Reibteil der Scheibe volumenmäßig 10 bis 15% Fasern, 65 bis 75% Matrix und 15 bis 20% Restporosität aufweist.

16. Bremsscheibe nach einem der Ansprüche 13 bis 15,
**dadurch gekennzeichnet, dass** der die Faserverstärkung des Kerns der Scheibe ausmachende Vorformteil zwischen Struktur-Faserlagen gelegte Filzlagen aufweist.

17. Bremsscheibe nach einem der Ansprüche 13 bis 16,
**dadurch gekennzeichnet, dass** der die Faserverstärkung des Kerns der Scheibe ausmachende Vorformteil zu den Flächen der Scheibe parallele Faserlagen aufweist.

18. Bremsscheibe nach einem der Ansprüche 13 bis 16,
**dadurch gekennzeichnet, dass** der die Faserverstärkung des Kerns der Scheibe ausmachende Vorformteil zu den Flächen der Scheibe senkrechte Faserlagen aufweist.

19. Bremsscheibe nach einem der Ansprüche 13 bis 18,
**dadurch gekennzeichnet, dass** die Faservorform und die Matrix aus Kohlenstoff sind.

20. Bremsvorrichtung für ein Reisekraftfahrzeug,
**dadurch gekennzeichnet, dass** sie mindestens eine Bremsscheibe nach einem der Ansprüche 13 bis 19, die mit Bremsbelägen zusammenwirkt, aufweist.

21. Bremsvorrichtung für ein schweres Straßenfahrzeug,
**dadurch gekennzeichnet, dass** sie mindestens eine Einheit von zwei Statorscheiben und einer Rotorscheibe nach einem der Ansprüche 13 bis 19 aufweist.

22. Bremsvorrichtung nach Anspruch 21,
**dadurch gekennzeichnet, dass** jede Statorscheibe radiale Aussparungen besitzt, die in der der Reibfläche entgegengesetzten Fläche der Scheibe über einen Teil ihrer Dicke ausgebildet sind.

## Claims

1. A method of manufacturing a composite material brake disk having a core and at least one friction portion located on one side of the core and having an outside friction face, the method comprising the steps of:
- preparing a fibre perform by superposing and bonding together fibre layers comprising structural layers formed at least in part out of continuous filaments and out of at least one felt layer;
- densifying the preform with a matrix; and
- machining the densified perform so as to obtain the disk to its final dimensions,
the method being **characterised in that** the fibre preform is prepared by using structural fibre layers to form at least a first preform portion that is to constitute the fibre reinforcement of the core of the brake disk, while the or each preform portion that is to constitute the fibre reinforcement of a friction portion of the brake disk is constituted by a felt, at least in its portion adjacent to the friction face of the disk.

2. A method of manufacturing a composite material braking assembly comprising a rotor brake disk having one core and two friction portions located on either side of the core, and two stator brake disks each having one core and two friction portions on one side of the core, the friction portions of the rotor disk and of the stator disks having outside friction faces, the method being **characterised in that** it comprises the steps of:
- preparing four substantially identical component fibre preforms, each component preform being prepared by superposing and bonding together fibre layers comprising structural layers formed at least in part out of continuous filaments and out of at least one felt layer, structural layers being used to form at least a first preform portion that is to constitute at least a portion of the core of a disk, while a second preform portion that is to constitute the fibre reinforcement of a friction portion of the disk is constituted by a felt, at least in its portion adjacent to the friction face;
- densifying the four preforms with a matrix;
- obtaining a densified perform for a rotor disk having two friction faces by putting two component performs together as densified with their first perform portions disposed side by side, and machining the two performs to the final dimensions of the rotor disk, so as to obtain a rotor disk whose fibre reinforcement is constituted by a felt in its portions adjacent to the friction faces of the disk; and
- machining each of the other two performs to the final dimensions of a stator disk, so as to obtain two stator disks whose fibre reinforcement is constituted by a felt in its portion adjacent to the friction face of the disk.

3. A method according to claim 1 or 2, **characterised in that** felt layers are interposed between the structural fibre layers of a first preform portion.

4. A method according to any one of claims 1 to 3, **characterised in that** the layers constituting the first preform portion are bonded together by needling.

5. A method according to any one of claims 1 to 4, **characterised in that** the layers constituting the first preform portion are formed by winding a strip of fibre fabric.

6. A method according to claim 5, **characterised in that** the strip of fibre fabric comprises a helical cloth wound flat in superposed layers.

7. A method according to claim 5, **characterised in that** it comprises forming a cylindrical sleeve by winding the fibre fabric strip about a mandrel and slicing the sleeve in radial planes to obtain first preform portions.

8. A method according to any one of claims 1 to 7, **characterised in that** the felt forming at least a portion of the or each preform portion that is to constitute the fibre reinforcement of a friction portion of the brake disk is bonded to the remainder of the preform by needling.

9. A method according to any one of claims 1 to 8, **characterised in that** the felt forming, at least in part, the or each preform portion that is to constitute the fibre reinforcement of a friction portion of the brake disk has a fibre volume density less than 20%.

10. A method according to claim 2, **characterised in that** two component fibre performs are assembled by their first perform portions prior to densification using a matrix and densification is carried out on both assembled performs in order to obtain the densified perform of the rotor disk.

11. A method according to claim 2 or 10, **characterised in that** the final machining of the stator disks comprises forming notches that extend radially and over a depth that is smaller than the thickness of the core of the disk, from a rear face of each disk opposite its friction face.

12. A method according to claim 11, **characterised in that** the first preform portion for constituting the core of the disk is obtained from winding a fibre fabric strip into superposed layers around a mandrel.

13. A composite material brake disk comprising a fibre preform densified by a matrix, the disk having a core portion and at least one friction portion having a friction face on one side of the core, and the fibre preform having bonded together fibre layers comprising structural layers formed at least in part by continuous filaments, and at least one felt layer, the disk being **characterised in that** the preform portion constituting the fibre reinforcement of the or each friction portion of the disk is constituted by a felt, at least in its portion adjacent to the friction face, while the preform portion constituting the fibre reinforcement of the disk core comprises structural fibre layers.

14. A brake disk according to claim 13, **characterised in that** said felt has a fibre volume density of less than 20%.

15. A brake disk according to claim 13, **characterised in that** the or each friction portion of the disk comprises, by volume, 10% to 15% fibres, 65% to 75% matrix, and 15% to 20% residual pores.

16. A brake disk according to any one of claims 13 to 15, **characterised in that** the preform portion constituting the fibre reinforcement of the disk core has felt layers interleaved between structural fibre layers.

17. A brake disk according to any one of claims 13 to 16, **characterised in that** the preform portion constituting the fibre reinforcement of the disk core comprises fibre layers parallel to the faces of the disk.

18. A brake disk according to any one of claims 13 to 16, **characterised in that** the preform portion constituting the fibre reinforcement of the disk core comprises fibre layers perpendicular to the faces of the disk.

19. A brake disk according to any one of claims 13 to 18, **characterised in that** the fibre preform and the matrix are made of carbon.

20. Braking apparatus for a private car, **characterised in that** it comprises at least one brake disk according to any one of claims 13 to 19, co-operating with brake pads.

21. Braking apparatus for a heavy road vehicle, **characterised in that** it comprises at least one assembly of two stator disks and one rotor disk according to any one of claims 13 to 19.

22. Braking apparatus according to claim 21, **characterised in that** each stator disk has radial notches formed over a fraction of the thickness of the disk in its face opposite its friction face.
